# EUROPEAN PATENT APPLICATION

(11) **EP 3 839 906 A1**
(43) Date of publication of application: **23.06.2021**
(21) Application number: 20196900.3
(22) Date of filing: 18.09.2020
(51) Int. Cl.: G07G 1/00, G06Q 30/06, G07G 1/14

(54) **TRANSACTION PROCESSING SYSTEM**

(30) Priority: 19.12.2019 JP 2019229524
(71) Applicant: Toshiba Tec Kabushiki Kaisha, Shinagawa-ku Tokyo 141-8562 (JP)
(72) Inventor: SUZUKI, Kota, Shinagawa-ku Tokyo 141-8562 (JP)
(74) Representative: Bandpay & Greuter

(57) **Abstract**

A transaction processing system includes a plurality of terminal devices associated with display places of commodities and set near the associated display places and includes informing units, a first determining unit, a first updating unit, and a first instructing unit of one or more computers. The informing units are respectively provided in the terminal devices and perform an informing operation. The first determining unit determines the commodity taken out from any one of the display places. The first updating unit updates list data, which is stored in a storage device and represents a list of the commodities registered as purchased commodities, to register, as the purchased commodity, the commodity determined by the first determining unit. The first instructing unit instructs, according to the update of the list data by the first updating unit, execution of the informing operation by the informing unit of the terminal device correlated with the display place of the commodity determined by the first determining unit.

## Description

### FIELD

Embodiments described herein relate generally to a transaction processing system.

### BACKGROUND

A technique for monitoring actions of a shopper in a store with a large number of sensors to register, as purchased commodities, commodities taken out from a selling floor by the shopper has already been realized.

With the technique, operation for commodity registration such as reading of a barcode is unnecessary. However, since the technique does not involve the operation, the shopper cannot learn whether the registration of the purchased commodities is properly performed.

It is also conceivable to enable the shopper to confirm a list of registered purchased commodities with a portable information terminal carried by the shopper. However, in this case, the shopper has to operate the portable information terminal. Therefore, the advantage that the commodity registration can be performed without operation is nullified.

Under such circumstances, it has been desired that the shopper can confirm a registration state of purchased commodities without special operation.

Related art is described in, for example, JP-A-2018-180717.

### DESCRIPTION OF THE DRAWINGS

FIG. 1 is a block diagram illustrating a schematic configuration of a transaction processing system according to at least one embodiment;
FIG. 2 is a block diagram illustrating a main part circuit configuration of a sales management device illustrated in FIG. 1;
FIG. 3 is a diagram schematically illustrating the structure of a data record included in a member database illustrated in FIG. 2;
FIG. 4 is a diagram schematically illustrating the structure of a data record included in a selling floor terminal database illustrated in FIG. 2;
FIG. 5 is a diagram schematically illustrating the structure of a data record included in a shopper database illustrated in FIG. 2;
FIG. 6 is a diagram schematically illustrating the structure of a data record included in a purchased commodity database illustrated in FIG. 2;
FIG. 7 is a block diagram illustrating a main part circuit configuration of a check-in device illustrated in FIG. 1;
FIG. 8 is a block diagram illustrating a main part circuit configuration of an action monitoring device illustrated in FIG. 1;
FIG. 9 is a block diagram illustrating a main part circuit configuration of a selling floor terminal illustrated in FIG. 1;
FIG. 10 is a flowchart of action monitoring processing by a processor illustrated in FIG. 8;
FIG. 11 is a flowchart of sales management processing by a processor illustrated in FIG. 2;
FIG. 12 is a flowchart of the sales management processing by the processor illustrated in FIG. 2;
FIG. 13 is a flowchart of check-in processing by a processor illustrated in FIG. 7;
FIG. 14 is a flowchart of informing processing by a processor illustrating in FIG. 9;
FIG. 15 is a diagram illustrating an example of a commodity guidance screen;
FIG. 16 is a diagram illustrating an example of a registration completion screen; and
FIG. 17 is a diagram illustrating an example of a cancellation completion screen.

### DETAILED DESCRIPTION

An object of embodiments is to provide a transaction processing system with which a shopper can confirm a registration state of a purchased commodity without special operation.

According to at least one embodiment, there is provided a transaction processing system including a plurality of terminal devices correlated with display places of commodities and set near the correlated display places, the transaction processing system including informing units, a first determining unit, a first updating unit, and a first instructing unit of one or more computers. The informing units are respectively provided in the plurality of terminal devices and perform an informing operation. The first determining unit determines the commodity taken out from any one of the display places. The first updating unit updates list data, which is stored in a storage device and represents a list of the commodities registered as purchased commodities, to register, as the purchased commodity, the commodity determined by the first determining unit. The first instructing unit instructs, according to the update of the list data by the first updating unit, execution of the informing operation by the informing unit of the terminal device correlated with the display place of the commodity determined by the first determining unit.

Preferably, the storage device correlates the list data with a shopper and stores the list data, the first updating unit is configured to update the list data correlated with the shopper who takes out the commodity, and the informing unit is configured to inform, according to an instruction from the first instructing unit, together with identification data for identifying the shopper identified by a first identifying unit, of the one or more computers, a number of items and a total amount of the commodity registered as the purchased commodity by the update of the list data by the first updating unit.

Preferably, the transaction processing system further comprises: a second determining unit, of the one or more computers, configured to determine the commodity returned to the display place; a second updating unit, of the one or more computers, configured to update the list data to cancel the commodity determined by the second determining unit from the purchased commodities; and a second instructing unit, of the one or more computers, configured to instruct, according to the update of the list data by the second updating unit, execution of the informing operation by the informing unit of the terminal device associated with the display place of the commodity determined by the second determining unit.

Preferably, the second updating unit is configured to update the list data associated with the shopper who returns the commodity, and the informing unit is configured to inform, according to an instruction from the second instructing unit, together with the identification data for identifying the shopper identified by a second identifying unit, of the one or more computers, a number of items and a total amount of the commodity cancelled from the purchased commodities by the update of the list data by the second updating unit.

Preferably, the informing unit is configured to perform different informing operations respectively according to an instruction from the first instructing unit and an instruction from the second instructing unit.

Preferably, the transaction processing system further comprises a sensor configured to detect action of a shopper with respect to the commodities.

Preferably, the transaction processing system further comprises a monitor configured to monitor action of the shopper based on detection by the sensor.

Preferably, the transaction processing system further comprises a member database for storing a list of member IDs of shoppers registered to shop for the commodities.

Preferably, the transaction processing system further comprises a shopper database for storing shopper ID data.

Preferably, the transaction processing system further comprises a check in computer configured to check in a shopper based on a member ID.

Preferably, the transaction processing system further comprises an action monitoring computer configured to monitor action of a shopper with respect to the commodities.

Preferably, the action monitoring computer is configured to monitor at least one of a target shopper ID, leaving a store, or entering the store.

In another exemplary embodiment, there is also provided a method of operating a transaction processing system including a plurality of terminal devices associated with display places of commodities and set near the associated display places of the commodities, the method comprising: performing an informing operation; determining the commodity taken out from any one of the display places; updating list data, which is stored in a storage device and represents a list of the commodities registered as purchased commodities, to register, as the purchased commodity, the commodity determined; and instructing, according to the update of the list data, execution of the informing operation correlated with the display place of the commodity determined.

An example of at least one embodiment is explained below with reference to the drawings.

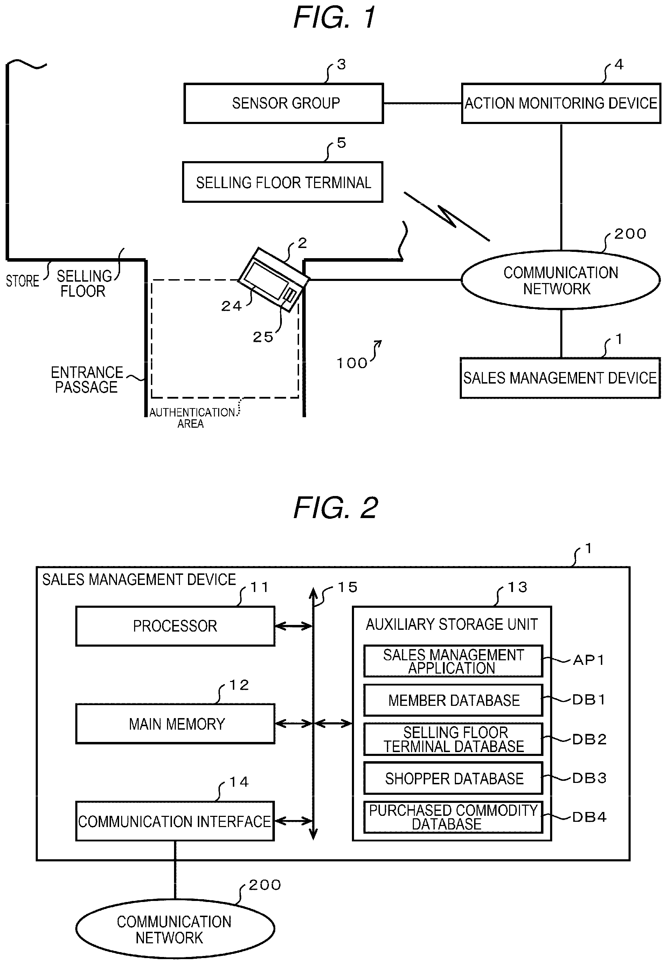

FIG. 1 is a block diagram illustrating a schematic configuration of a transaction processing system 100 according to at least one embodiment.

The transaction processing system 100 performs information processing concerning a transaction for selling commodities in a store that sells the commodities displayed in, for example, display shelves, display cases, and display stands in a selling floor. The transaction processing system 100 is configured by communicably connecting a sales management device 1, a check-in device 2, a sensor group 3, an action monitoring device 4, and a selling floor terminal 5 via a communication network 200. The transaction processing system 100 may comprise one or more computers to facilitate its functionality as further discussed.

As the communication network 200, the Internet, a VPN (virtual private network), a LAN (local area network), a public communication network, a mobile communication network, and the like are used alone or used in combination as appropriate.

The sales management device 1 performs sales management processing, which is information processing concerning purchase of commodities by a shopper in the store, based on a monitoring result by the action monitoring device 4. The sales registration processing includes registration processing and accounting processing. The registration processing is processing for registering, as purchased commodities, commodities that the shopper is about to purchase. The accounting processing is processing for calculating a price of the purchased commodities and causing the shopper to settle the price.

The check-in device 2 receives a check-in procedure for entering the store.

The sensor group 3 includes a large number of sensors disposed in the store. The large number of sensors respectively detect actions of shoppers and display states of commodities. The sensors may be, for example, cameras, optical sensors, infrared sensors, temperature sensors, or weight sensors.

The action monitoring device 4 performs monitoring targeting people present in the store and monitors actions of the people and display states of commodities in the store based on detection results in the sensor group 3.

The selling floor terminal 5 is a terminal device set in a selling floor of the store to provide information concerning commodities displayed near the selling floor terminal 5 to shoppers. In FIG. 1, only one selling floor terminal 5 is illustrated. However, in practice, a plurality of selling floor terminals 5 may be respectively provided to be associated with different display places. In the following explanation, it is assumed that one or a plurality of items of a commodity identified by one commodity code are displayed in a display place associated with one selling floor terminal 5. Therefore, the selling floor terminal 5 is assumed to adopt a form like an existing electronic tag. However, one or a plurality of items of each of a plurality of commodities respectively identified by a plurality of commodity codes may be displayed in the display place associated with one selling floor terminal 5. In this case, the selling floor terminal 5 may adopt a form like an electronic shelf tag or may adopt a form like a tablet terminal. The selling floor terminal 5 is attached to a furniture for commodity display such as a display shelf, a display case, or a display stand to be located near the display place associated with the selling floor terminal 5. The selling floor terminal 5 may be attached to a structure in the store such as a wall or a pillar. The commodity code is an identification code decided to identify a commodity for each SKU (stock keeping unit). For example, a JAN (Japanese article number) code is used as the commodity code.

FIG. 2 is a block diagram illustrating a main part circuit configuration of the sales management device 1.

The sales management device 1 includes a processor 11, a main memory 12, an auxiliary storage unit 13, a communication interface 14, and a transmission line 15. The processor 11, the main memory 12, the auxiliary storage unit 13, and the communication interface 14 are connected by the transmission line 15. The processor 11, the main memory 12, and the auxiliary storage unit 13 are connected by the transmission line 15 to configure a computer that performs information processing for controlling the sales management device 1.

The processor 11 is equivalent to a central part of the computer. The processor 11 performs information processing for realizing various functions of the sales management device 1 according to an information processing program.

The main memory 12 is equivalent to a main storage part of the computer. The main memory 12 includes a nonvolatile memory region and a volatile memory region. The main memory 12 stores the information processing program in the nonvolatile memory region. The main memory 12 sometimes stores, in the nonvolatile or volatile memory region, data necessary for the processor 11 in executing information processing. The main memory 12 uses the volatile memory region as a work area where data is rewritten as appropriate by the processor 11.

The auxiliary storage unit 13 is equivalent to an auxiliary storage part of the computer. As the auxiliary storage unit 13, for example, a well-known storage device such as an EEPROM (electric erasable programmable read-only memory), an HDD (hard disc drive), or an SSD (solid state drive) may be used alone or a plurality of storage devices are used in combination. The auxiliary storage unit 13 saves data used by the processor 11 in performing various kinds of processing and data created by the processing in the processor 11. The auxiliary storage unit 13 stores information processing programs. One of the information processing programs stored by the auxiliary storage unit 13 is an application program for sales management processing (hereinafter referred to as sales management application) AP1. The auxiliary storage unit 13 stores a member database DB1, a selling floor terminal database DB2, a shopper database DB3, and a purchased commodity database DB4.

The member database DB1 is a database for managing shoppers who finish member registration for doing shopping in the store.

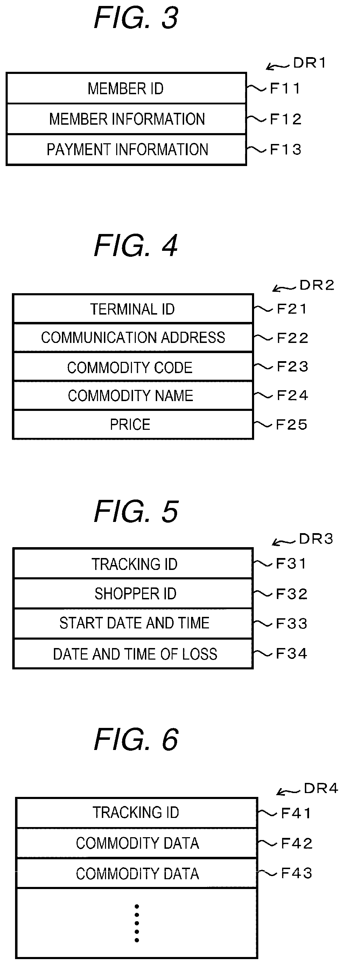

FIG. 3 is a diagram schematically illustrating the structure of a data record DR1 included in the member database DB1.

The member database DB1 may be a set of data records DR1 having the structure illustrated in FIG. 3. The data records DR1 are respectively correlated with shoppers. One data record DR1 includes fields F11, F12, and F13. In the field F11, a member ID (identifier) given in the member registration in order to distinguish a shopper correlated with the data record DR1 from other shoppers is set. In the field F12, member information representing attributes and the like of the correlated shopper is set. The member information may include any information. The information included in the member information is, for example, a name, age, sex, an address, and a telephone number. In the field F13, payment information relating to payment of a price by the correlated shopper is set. The payment information is, for example, a credit card number.

The selling floor terminal database DB2 is a database for managing the selling floor terminal 5.

FIG. 4 is a diagram schematically illustrating the structure of a data record DR2 included in the selling floor terminal database DB2.

The selling floor terminal database DB2 may be a set of data records DR2 having the structure illustrated in FIG. 4. The data records DR2 are respectively correlated with the selling floor terminals 5. One data record DR2 includes fields F21, F22, F23, F24, and F25. In the field F21, a terminal ID for identifying the selling floor terminal 5 correlated with the data record DR2 is set. In the field F22, a communication address for communicating with the correlated selling floor terminal 5 via the communication network 200 is set. In the fields F23, F24, and F25, a commodity code, a commodity name, and a price concerning a commodity displayed in a display place associated with the correlated selling floor terminal 5 are set. In the data record DR2, if the correlated selling floor terminal 5 is associated with a display place where a plurality of commodities are displayed, fields in which a plurality of sets of commodity codes, commodity names, and prices concerning the respective plurality of commodities are set are added.

The shopper database DB3 is a database for managing shoppers present in the store.

FIG. 5 is a diagram schematically illustrating the structure of a data record DR3 included in the shopper database DB3.

The shopper database DB3 may be a set of data records DR3 having the structure illustrated in FIG. 5. The data records DR3 are respectively correlated with target persons of monitoring by the action monitoring device 4. One data record DR3 includes fields F31, F32, F33, and F34. In the field F31, a tracking ID for identifying a target person correlated with the data record DR3 in the action monitoring device 4 is set. In the field F32, a shopper ID for identifying the correlated target person in the sales management device 1 is set. If the shopper ID is unknown, the field F32 is left blank or data predetermined to be distinguishable from the shopper ID is set in the field F32. In this embodiment, it is assumed that predetermined invalid data is set in the field F32. In the field F33, data representing date and time when the action monitoring device 4 starts tracking of the correlated target person is set. In the field F34, data representing date and time when the tracking of the correlated target person by the action monitoring device 4 is lost is set. If the tracking of the correlated target person by the action monitoring device 4 is continued, the field F32 is left blank or data predetermined to be distinguishable from regular date and time is set. In this embodiment, it is assumed that predetermined invalid data is set.

The purchased commodity database DB4 is a database for managing purchased commodities set as targets of transactions with shoppers present in the store.

FIG. 6 is a diagram schematically illustrating the structure of a data record DR4 included in the purchased commodity database DB4.

The purchased commodity database DB4 is a set of data records DR4 having the structure illustrated in FIG. 6. The data records DR4 are respectively correlated with target persons set as targets of monitoring by the action monitoring device 4. One data record DR4 includes at least a field F41. The data record DR4 could include fields F42, F43, and the like. In the field F41, a tracking ID concerning a target person correlated with the data record DR4 is set. If purchased commodities are already registered concerning the correlated target person, the field F42 and subsequent fields are included in the data record DR4. In the field F42 and the subsequent fields, commodity data concerning commodities already registered as the purchased commodities concerning the correlated target person is set. The commodity data includes a commodity code, the number of items, and a cancellation flag. The commodity data may include other information such as a unit price and a commodity name. The cancellation flag is flag data for specifying a commodity once registered as a purchased commodity but cancelled thereafter. In this way, a list of purchased commodities concerning the correlated target person is represented by the field F42 and the subsequent fields. That is, the purchased commodity database DB4 is an example of list data representing a list of commodities registered as purchased commodities. The auxiliary storage unit 13 is equivalent to a storage device that stores the list data.

The communication interface 14 is an interface for data communication via the communication network 200. As the communication interface 14, for example, a well-known communication device for performing data communication via a LAN can be used.

The transmission line 15 includes an address bus, a data bus, and a control signal line and transmits data and control signals exchanged among the connected units.

As hardware of the sales management device 1, for example, a general-purpose network server or other computer devices can be used. In general, transfer of the sales management device 1 may be performed in a state in which the sales management application AP1 is stored in the auxiliary storage unit 13 and the member database DB1, the selling floor terminal database DB2, the shopper database DB3, and the purchased commodity database DB4 are not stored in the auxiliary storage unit 13. However, the hardware in a state in which the sales management application AP1 is not stored in the auxiliary storage unit 13 or a state in which a sales management application of the same type and another version is stored in the auxiliary storage unit 13 and the sales management application AP1 may be individually transferred. The sales management application AP1 is written in the auxiliary storage unit 13 according to operation by any operator, whereby the sales management device 1 may be configured. Transfer of the sales management application AP1 can be performed by recording the sales management application AP1 in a removable recording medium such as a magnetic disk, a magneto-optical disk, an optical disk, or a semiconductor memory or can be performed by communication via a network.

The processor 11 executes information processing for member registration, whereby the member database DB1 is written in the auxiliary storage unit 13. Alternatively, as the member database DB1, for example, during a start of the sales management device 1, a member database managed by a not-illustrated member management server may be acquired via the communication network 200 and written in the auxiliary storage unit 13. The member database DB1 may not be stored in the auxiliary storage unit 13. The processor 11 may refer to the member database managed by the member management server.

In work for introducing the transaction processing system 100 into the store, the selling floor terminal database DB2 is created by an operator or the like of the work and written in the auxiliary storage unit 13. Alternatively, as the selling floor terminal database DB2, for example, during the start of the sales management device 1, a selling floor terminal database managed by a not-illustrated selling floor terminal management server may be acquired via the communication network 200 and written in the auxiliary storage unit 13. The selling floor terminal database DB2 may not be stored in the auxiliary storage unit 13. The processor 11 may refer to the selling floor terminal database managed by the selling floor terminal management server.

The processor 11 executes the information processing based on the sales management application AP1, whereby the shopper database DB3 and the purchased commodity database DB4 are formed in the auxiliary storage unit 13.

At least a part of the sales management application AP1, the member database DB1, the shopper database DB3, and the purchased commodity database DB4 may be stored in the main memory 12.

As illustrated in FIG. 1, the check-in device 2 is disposed in an entrance passage, where a shopper entering a selling floor of the store passes, to be operated by the shopper. However, a setting place and a setting form of the check-in device 2 may be any setting place and any setting form if the check-in device 2 can be operated by a shopper about to enter the selling floor.

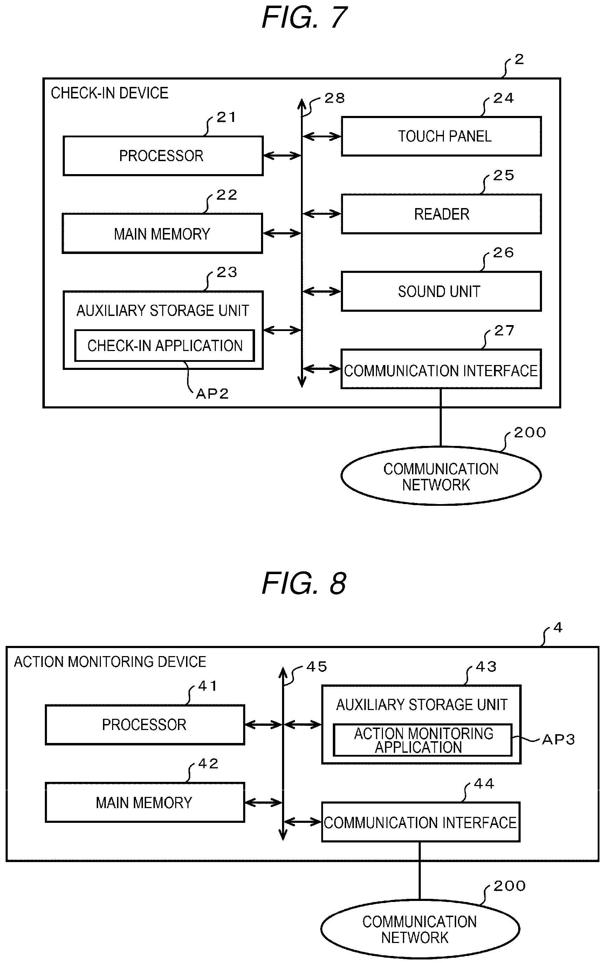

FIG. 7 is a block diagram illustrating a main part circuit configuration of the check-in device 2.

The check-in device 2 includes a processor 21, a main memory 22, an auxiliary storage unit 23, a touch panel 24, a reader 25, a sound unit 26, a communication interface 27, and a transmission line 28. The processor 21, the main memory 22, the auxiliary storage unit 23, the touch panel 24, the reader 25, the sound unit 26, and the communication interface 27 are connected by the transmission line 28. The processor 21, the main memory 22, and the auxiliary storage unit 23 are connected by the transmission line 28 to configure a computer that performs information processing for controlling the check-in device 2. Overviews of functions of the processor 21, the main memory 22, the auxiliary storage unit 23, the communication interface 27, and the transmission line 28 are equivalent to the overviews of the functions of the processor 11, the main memory 12, the auxiliary storage unit 13, the communication interface 14, and the transmission line 15. Therefore, explanation of the overviews of the functions is omitted.

One of information processing programs stored by the auxiliary storage unit 23 is an application program for realizing a function of the check-in device 2 (hereinafter referred to as check-in application) AP2.

The touch panel 24 displays a screen for presenting various kinds of information to an operator. That is, the touch panel 24 is an example of a display device. Data designated by touch operation by the operator is input to the touch panel 24. The operator of the check-in device 2 is a shopper in most cases. However, a store clerk is sometimes the operator.

The reader 25 reads a member ID presented by a shopper. For example, a magnetic card reader is used as the reader 25. An optical barcode reader or a wireless reader using proximity wireless communication may be used as the reader 25.

The sound unit 26 outputs various kinds of sound such as voice and melody.

As hardware of the check-in device 2, for example, a general-purpose tablet computer or other general-purpose computer devices can be used. In general, transfer of the check-in device 2 is performed in a state in which the check-in application AP2 is stored in the auxiliary storage unit 23. However, the hardware in a state in which the check-in application AP2 is not stored in the auxiliary storage unit 23 or a state in which a check-in application of the same type and another version is stored in the auxiliary storage unit 23 and the check-in application AP2 may be individually transferred. The check-in application AP2 is written in the auxiliary storage unit 23 according to operation by any operator, whereby the check-in device 2 may be configured. Transfer of the check-in application AP2 can be performed by recording the check-in application AP2 in a removable recording medium such as a magnetic disk, a magneto-optical disk, an optical disk, or a semiconductor memory or can be performed by communication via a network.

FIG. 8 is a block diagram illustrating a main part circuit configuration of the action monitoring device 4.

The action monitoring device 4 may include a processor 41, a main memory 42, an auxiliary storage unit 43, a communication interface 44, and a transmission line 45. The processor 41, the main memory 42, the auxiliary storage unit 43, and the communication interface 44 are connected by the transmission line 45. The processor 41, the main memory 42, and the auxiliary storage unit 43 are connected by the transmission line 45 to configure a computer that performs information processing for controlling the action monitoring device 4. Overviews of functions of the processor 41, the main memory 42, the auxiliary storage unit 43, the communication interface 44, and the transmission line 45 are equivalent to the overviews of the functions of the processor 11, the main memory 12, the auxiliary storage unit 13, the communication interface 14, and the transmission line 15. Therefore, explanation of the overviews of the functions is omitted.

One of information processing programs stored by the auxiliary storage unit 43 is an application program for realizing a function of the action monitoring device 4 (hereinafter referred to as action monitoring application) AP3.

As hardware of the action monitoring device 4, for example, a general-purpose network server or other computer devices can be used. In general, transfer of the action monitoring device 4 is performed in a state in which the action monitoring application AP3 is stored in the auxiliary storage unit 43. However, the hardware in a state in which the action monitoring application AP3 is not stored in the auxiliary storage unit 43 or a state in which an action monitoring application of the same type and another version is stored in the auxiliary storage unit 43 and the action monitoring application AP3 may be individually transferred. The action monitoring application AP3 is written in the auxiliary storage unit 43 according to operation by any operator, whereby the action monitoring device 4 may be configured. Transfer of the action monitoring application AP3 can be performed by recording the action monitoring application AP3 in a removable recording medium such as a magnetic disk, a magneto-optical disk, an optical disk, or a semiconductor memory or can be performed by communication via a network.

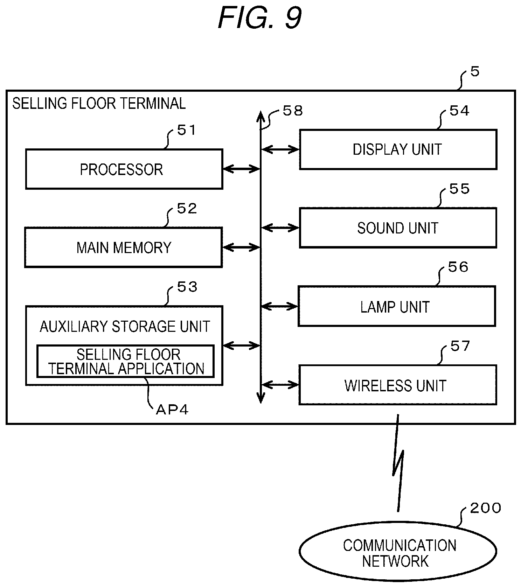

FIG. 9 is a block diagram illustrating a main part circuit configuration of the selling floor terminal 5.

The selling floor terminal 5 may include a processor 51, a main memory 52, an auxiliary storage unit 53, a display unit 54, a sound unit 55, a lamp unit 56, a wireless unit 57, and a transmission line 58. The processor 51, the main memory 52, the auxiliary storage unit 53, the display unit 54, the sound unit 55, the lamp unit 56, and the wireless unit 57 are connected by the transmission line 58. The processor 51, the main memory 52, and the auxiliary storage unit 53 are connected by the transmission line 58 to configure a computer that performs information processing for controlling the selling floor terminal 5. Overviews of functions of the processor 51, the main memory 52, the auxiliary storage unit 53, and the transmission line 58 are equivalent to the overviews of the functions of the processor 11, the main memory 12, the auxiliary storage unit 13, and the transmission line 15. Therefore, explanation of the overview of the functions is omitted.

One of information processing programs stored by the auxiliary storage unit 53 is an application program for realizing a function of the selling floor terminal 5 (hereinafter referred to as selling floor terminal application) AP4.

The display unit 54 displays a screen for presenting various kinds of information to a shopper. As the display unit 54, for example, a unit including a well-known display device such as an electronic paper or a liquid crystal display device can be applied.

The sound unit 55 outputs various kinds of sound such as voice and melody.

The lamp unit 56 includes one or a plurality of lamps and lights the lamps under an instruction from the processor 51. In this embodiment, the lamp unit 56 includes two lamps for respectively informing registration completion and cancellation completion.

The wireless unit 57 performs communication processing for performing data communication using the communication network 200 via wireless communication between the wireless unit 57 and an access point included in the communication network 200. As the wireless unit 57, for example, a well-known communication device conforming to the IEEE802.11 standard can be used.

The operation of the transaction processing system 100 configured as explained above is explained. Contents of various kinds of information processing explained below are examples. A change of the order of a part of the processing, omission of a part of the processing, addition of other processing, or the like is possible as appropriate.

A shopper shopping in the store managed by the transaction processing system 100 finishes member registration in advance and acquires a member card in which a member ID is recorded.

When moving to the selling floor passing through the entrance passage illustrated in FIG. 1, the shopper causes the reader 25 of the check-in device 2 to read the member ID recorded in the member card.

In the action monitoring device 4, the processor 41 executes action monitoring processing based on the action monitoring application AP3. In a situation in which a plurality of target persons are present in the store, the processor 41 executes the action monitoring processing explained below in parallel concerning the respective target persons. In the following explanation concerning the action monitoring processing, the action monitoring processing is explained concerning one target person. The relevant target person is simply referred to as "target person".

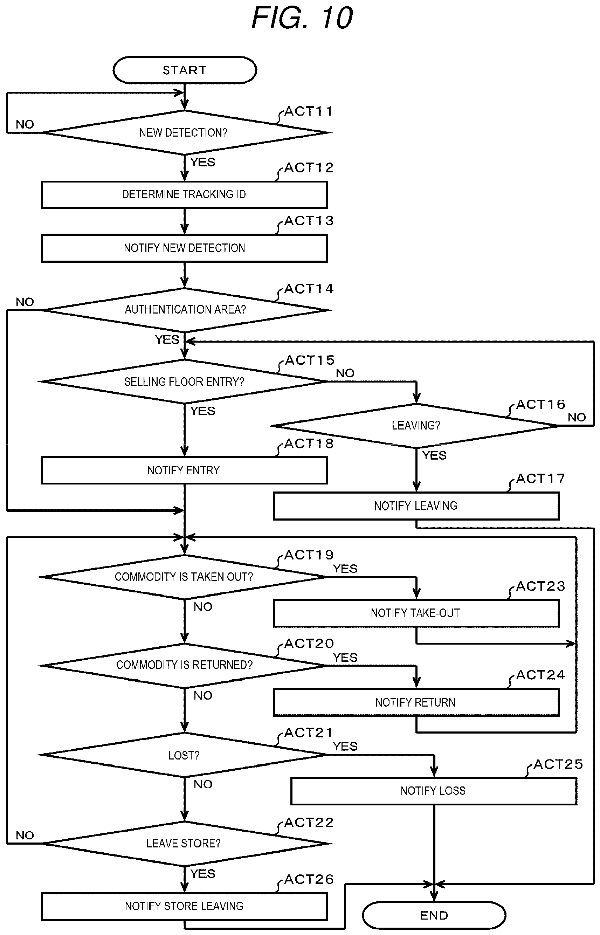

FIG. 10 is a flowchart of the action monitoring processing by the processor 41.

In ACT 11, the processor 41 waits for a target person to be detected anew. For example, the processor 41 monitors outputs of the sensor group 3. If detecting a target person different from a monitored target person, the processor 41 determines YES and proceeds to ACT 12. For example, if the shopper moving to the selling floor enters the entrance passage as explained above, the processor 41 detects the shopper as a new target person. For example, the processor 41 repeatedly records the position of the detected target person at a short period and monitors a moving track of the target person to track the target person. Accordingly, if a state in which the target person cannot be detected by the sensor group 3 continues for a fixed period, the processor 41 sometimes loses track of the target person. If detecting a monitored shopper again after temporarily losing track of the shopper, the processor 41 also detects the shopper as a new target person.

In ACT 12, the processor 41 determines, according to predetermined rules, a tracking ID for distinguishing the detected target person from other monitored target persons. The rules may be any rules if the rules are decided such that a tracking ID determined anew does not overlap tracking IDs determined for other target persons already monitored. The rules are decided by, for example, a creator of the action monitoring application AP3.

In ACT 13, the processor 41 notifies the sales management device 1 that the target person is detected anew. The processor 41 sends, for example, notification data including a notification code decided in advance as a notification code representing a notification of new detection and the tracking ID determined in ACT 12 to the communication network 200 to transmit the notification data from the communication interface 44 to the sales management device 1. The notification data is transmitted to the sales management device 1 by the communication network 200. The processor 41 may include, in the notification data, data representing date and time when the target person is detected.

Various notifications among devices explained below are realized by transmitting notification data including notification codes representing reasons for the notifications from a notification source device to a notification destination device via the communication network 200.

On the other hand, in the sales management device 1, the processor 11 executes sales management processing based on the sales management application AP1.

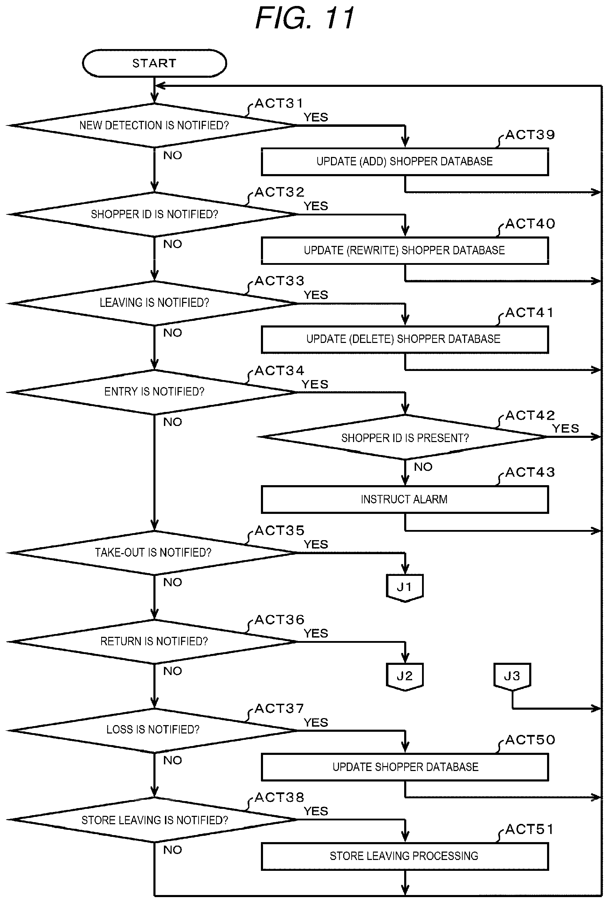

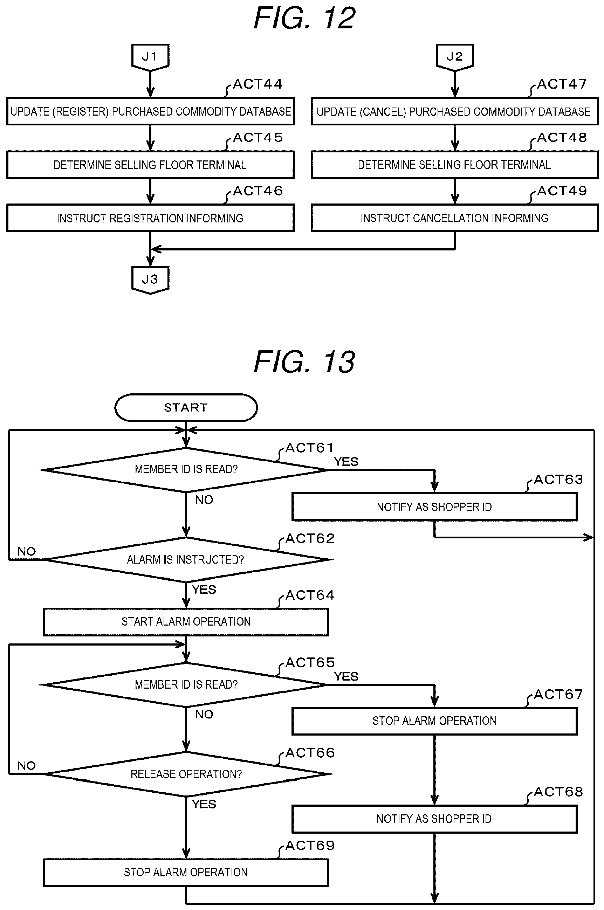

FIGS. 11 and 12 are flowcharts of the sales management processing by the processor 11.

In ACT 31 in FIG. 11, the processor 11 confirms whether new detection is notified. If failing in confirming the notification, the processor 11 determines NO and proceeds to ACT 32.

In ACT 32, the processor 11 confirms whether a shopper ID is notified. If failing in confirming the notification, the processor 11 determines NO and proceeds to ACT 33.

In ACT 33, the processor 11 confirms whether leaving is notified. If failing in confirming the notification, the processor 11 determines NO and proceeds to ACT 34.

In ACT 34, the processor 11 confirms whether entry is notified. If failing in confirming the notification, the processor 11 determines NO and proceeds to ACT 35.

In ACT 35, the processor 11 confirms whether take-out is notified. If failing in confirming the notification, the processor 11 determines NO and proceeds to ACT 36.

In ACT 36, the processor 11 confirms whether return is notified. If failing in confirming the notification, the processor 11 determines NO and proceeds to ACT 37.

In ACT 37, the processor 11 confirms whether loss is notified. If failing in confirming the notification, the processor 11 determines NO and proceeds to ACT 38.

In ACT 38, the processor 11 confirms whether store leaving is notified. If failing in confirming the notification, the processor 11 determines NO and returns to ACT 31.

In this way, in ACT 31 to ACT 38, the processor 11 waits for any one of new detection, a shopper ID, leaving, entry, take-out, return, loss, and store leaving to be notified.

The notification data sent from the action monitoring device 4 in order to notify that the target person is detected anew is transmitted to the sales management device 1 by the communication network 200. In the sales management device 1, if the notification data is received by the communication interface 14, the processor 11 determines YES in ACT 31 and proceeds to ACT 39.

In ACT 39, the processor 11 updates the shopper database DB3 to add a new data record DR3 correlated with the target person detected this time. The processor 11 sets the tracking ID included in the notification data in the field F31 of the data record DR3 to be added. The processor 11 sets invalid data in the field F32 of the data record DR3 to be added. The processor 11 sets data representing the present date and time in the field F33 of the data record DR3 to be added. If data representing detection date and time is included in the notification data, the processor 11 may set the data in the field F33. The processor 11 sets invalid data in the field F34 of the data record DR3 to be added. Thereafter, the processor 11 returns to the waiting state in ACT 31 to ACT 38.

On the other hand, in the check-in device 2, the processor 21 executes check-in processing based on the check-in application AP2.

FIG. 13 is a flowchart of the check-in processing by the processor 21.

In ACT 61, the processor 21 confirms whether the member ID is read by the reader 25. If failing in confirming that the member ID is read, the processor 21 determines NO and proceeds to ACT 62.

In ACT 62, the processor 21 confirms whether an alarm instruction is performed from the sales management device 1. If failing in confirming that the alarm instruction is performed, the processor 21 determines NO and returns to ACT 61.

In this way, in ACT 61 and ACT 62, the processor 21 waits for the member ID to be read or the alarm instruction to be performed.

If the shopper causes the reader 25 of the check-in device 2 to read the member ID recorded in the member card while moving to the selling floor passing through the entrance passage as explained above, the processor 21 determines YES in ACT 61 and proceeds to ACT 63.

In ACT 63, the processor 21 notifies the member ID to the sales management device 1 as a shopper ID. The processor 21 includes, in notification data for the notification, for example, the member ID read by the reader 25. Thereafter, the processor 21 returns to the waiting state in ACT 61 and ACT 62. In at least one embodiment, it is assumed that the processor 21 permits only a member finishing member registration in advance to do shopping. However, the processor 21 may also permit a non-member to do shopping. In this case, the processor 21 receives a declaration of the non-member as, for example, predetermined operation on the touch panel 24 and temporarily allocates a shopper ID for the non-member distinguishable from the member ID to the shopper. The processor 21 may allocate a shopper ID different from the member ID to a shopper, who is the member, every time the shopper checks in.

In the sales management device 1, if the shopper ID is notified in this way, the processor 11 determines YES in ACT 32 in FIG. 11 and proceeds to ACT 40.

In ACT 40, the processor 11 updates the shopper database DB3 in order to correlate the notified shopper ID with the tracking ID. For example, the processor 11 rewrites the data record DR3, which is added to the shopper database DB3 as explained above and in which the invalid data is set in the field F32, to set the shopper ID included in the notification data in the field F32. Thereafter, the processor 11 returns to the waiting state in ACT 31 to ACT 38.

In the action monitoring device 4, after notifying the new detection in ACT 13 in FIG. 10, the processor 41 proceeds to ACT 14.

In ACT 14, the processor 41 confirms whether a position where the target person is detected anew is within an authentication area. If the position is within the authentication area, the processor 41 determines YES and proceeds to ACT 15.

In ACT 15, the processor 41 confirms whether the target person enters the selling floor from the authentication area. If failing in confirming such an action, the processor 41 determines NO and proceeds to ACT 16.

In ACT 16, the processor 41 confirms whether the target person turns back in the entrance passage without entering the selling floor and leaves the store. If failing in confirming such an action, the processor 41 determines NO and returns to ACT 15.

In this way, in ACT 15 and ACT 16, the processor 41 waits for the target person to leave the authentication area or enter the selling floor.

]The shopper sometimes cancels the shopping because of some reason and turns back in the entrance passage and exits to the outside of the store, for example, if the shopper leaves a member card at home. If confirming such an action of the target person, the processor 41 determines YES in ACT 16 and proceeds to ACT 17.

In ACT 17, the processor 41 notifies the leaving to the sales management device 1. The processor 41 includes, in notification data for the notification, for example, the tracking ID determined in ACT 12. Thereafter, the processor 41 ends the action monitoring processing.

In the sales management device 1, if the leaving is notified in this way, the processor 11 determines YES in ACT 33 in FIG. 11 and proceeds to ACT 41.

In ACT 41, the processor 11 updates the shopper database DB3 in order to delete the data record DR3 correlated with the target person. That is, the processor 11 deletes, from the shopper database DB3, the data record DR3 in which the tracking ID included in the notification data is set in the field F31. Thereafter, the processor 11 returns to the waiting state in ACT 31 to ACT 38.

In the action monitoring device 4, if confirming that the target person enters the selling floor from the authentication area, the processor 41 determines YES in ACT 15 in FIG. 10 and proceeds to ACT 18.

In ACT 18, the processor 41 notifies the entry into the selling floor to the sale management device 1. The processor 41 includes, in notification data for the notification, for example, the tracking ID determined in ACT 12.

In the sales management device 1, if the selling floor entry is notified in this way, the processor 11 determines YES in ACT 34 in FIG. 11 and proceeds to ACT 42.

In ACT 42, the processor 11 confirms whether a shopper ID correlated with the tracking ID included in the notification data is present. For example, the processor 11 finds out, from the shopper database DB3, the data record DR3 in which the tracking ID included in the notification data is set in the field F31. If the relevant data record DR3 is found, the processor 11 confirms whether a valid shopper ID is set in the field F32 of the data record DR3. If invalid data is set in the relevant field F32, the processor 11 determines NO and proceeds to ACT 43.

In ACT 43, the processor 11 instructs the check-in device 2 to sound an alarm. For example, the processor 11 transmits a command representing the instruction for the alarm from the communication interface 14 to the check-in device 2. Thereafter, the processor 11 returns to the waiting state in ACT 31 to ACT 38.

If the command is transmitted to the check-in device 2 by the communication network 200, the command is received by the communication interface 27 in the check-in device 2. According to the command, the processor 21 determines YES in ACT 62 in FIG. 13 and proceeds to ACT 64.

In ACT 64, the processor 21 starts an alarm operation. The alarm operation is, for example, display on the touch panel 24 of the screen for warning the shopper that the shopper cannot enter the store because the reading of the member card is not completed. The alarm operation may be, for example, an output by the sound unit 26 of a voice message for warning the shopper that the shopper cannot enter the store because the reading of the member card is not completed. The alarm operation may be, for example, an output by the sound unit 26 of warning sound for informing an abnormality. The alarm operation may be, for example, lighting or flashing of a separately provided warning lamp. The alarm operation may be, for example, notification to an information terminal used by an employee of the store such as a store clerk or a watchman. The processor 21 may execute a plurality of different alarm operations in parallel or sequentially.

In ACT 65, the processor 21 confirms whether the member ID is read by the reader 25. If failing in confirming that the member ID is read, the processor 21 determines NO and proceeds to ACT 66.

In ACT 66, the processor 21 confirms whether release operation is performed. If failing in confirming that the release operation is performed, the processor 21 determines NO and returns to ACT 65.

In this way, in ACT 65 and ACT 66, the processor 21 waits for the member ID to be read or the release operation to be performed.

If the shopper causes, in response to the alarm operation, the reader 25 of the check-in device 2 to read the member ID recorded in the member card, the processor 21 determines YES in ACT 65 and proceeds to ACT 67.

In ACT 67, the processor 21 stops the alarm operation.

In ACT 68, the processor 21 notifies the shopper ID as in ACT 63. Thereafter, the processor 21 returns to the waiting state in ACT 61 and ACT 62.

For example, if the shopper cannot cause the reader 25 of the check-in device 2 to read the member ID recorded in the member card, the employee in the store urges the shopper to leave the store. The employee performs predetermined release operation on the touch panel 24. If the release operation is performed in this way, the processor 21 determines YES in ACT 66 and proceeds to ACT 69.

In ACT 69, the processor 21 stops the alarm operation. Thereafter, the processor 21 returns to the waiting state in ACT 61 and ACT 62.

In the sales management device 1, if confirming in ACT 42 in FIG. 11 that the shopper ID correlated with the tracking ID is present, the processor 11 determines YES and directly returns to the waiting state in ACT 31 to ACT 38 passing the ACT 43. Consequently, the shopper correctly finishing the reading of the member ID is permitted to enter the selling floor.

The shopper entering the selling floor looks around commodities displayed in the selling floor and takes out, from the display place, a commodity that the shopper purchases. The shopper returns, to the display place, a commodity that the shopper takes out from the display place once but cancels.

In the action monitoring device 4, if finishing the notification in ACT 18 in FIG. 10, the processor 41 proceeds to ACT 19.

In ACT 19, the processor 41 confirms whether an action of the target person taking out a commodity is successfully confirmed. If failing in confirming the action, the processor 41 determines NO and proceeds to ACT 20.

In ACT 20, the processor 41 confirms whether an action of the target person returning a commodity is successfully confirmed. If failing in confirming the action, the processor 41 determines NO and proceeds to ACT 21.

In ACT 21, the processor 41 confirms whether the target person is lost track of. If succeeding in monitoring the target person, the processor 41 determines NO and proceeds to ACT 22.

In ACT 22, the processor 41 confirms whether the target person leaves the store. If failing in confirming store leaving, the processor 41 determines NO and returns to ACT 19.

In this way, in ACT 19 to ACT 22, the processor 41 waits for take-out of a commodity, return of a commodity, loss, or store leaving.

If confirming the action of the target person taking out a commodity, the processor 41 determines YES in ACT 19 and proceeds to ACT 23.

In ACT 23, the processor 41 notifies the take-out to the sales management device 1. The processor 41 includes, in notification data for the notification, for example, the tracking ID determined in ACT 12. The processor 41 determines the taken-out commodity and the number of items of the commodity and includes, in the notification data, a commodity code for identifying the commodity and the number of items of the commodity. The processor 41 executes the information processing based on the action monitoring application AP3 in this way, whereby a computer including the processor 41 as a central part functions as a first determining unit. Thereafter, the processor 41 returns to the waiting state in ACT 19 to ACT 22.

If confirming the action of the target person returning the commodity, the processor 41 determines YES in ACT 20 and proceeds to ACT 24.

In ACT 24, the processor 41 notifies the return to the sales management device 1. The processor 41 includes, in notification data for the notification, for example, the tracking ID determined in ACT 12. The processor 41 determines the returned commodity and the number of items of the commodity and includes, in the notification data, a commodity code for identifying the commodity and the number of items of the commodity. The processor 41 executes the information processing based on the action monitoring application AP3 in this way, whereby the computer including the processor 41 as the central part functions as a second determining unit. Thereafter, the processor 41 returns to the waiting state in ACT 19 to ACT 22.

In the sales management device 1, if the take-out is notified as explained above, the processor 11 determines YES in ACT 35 in FIG. 11 and proceeds to ACT 44.

In ACT 44, the processor 11 updates the purchased commodity database DB4 in order to register a purchased commodity based on the notification. That is, if the data record DR4, in which the tracking ID included in the notification data of the take-out is set in the field F41, is not included in the purchased commodity database DB4, the processor 11 adds a new data record DR4 to the purchased commodity database DB4. The processor 11 sets, in the field F41 of the data record DR4 to be added, the tracking ID included in the notification data. The processor 11 sets, in the field F42 of the data record DR4 to be added, commodity data including the commodity code and the number of items included in the notification data of the take-out and including a cancellation flag for a state indicating that the purchased commodity is not cancelled. On the other hand, if the data record DR4, in which the tracking ID included in the notification data of the take-out is set in the field F41, is already included in the purchased commodity database DB4, the processor 11 adds new commodity data to the data record DR4. That is, the processor 11 adds, behind a field in which the commodity data is already set, a field in which the new commodity data is set. The processor 11 includes, in the new commodity data, the commodity code and the number of items included in the notification data of the take-out and the cancellation flag for the state indicating that the purchased commodity is not cancelled. The processor 11 executes the information processing based on the sales management application AP1 in this way, whereby the computer including the processor 11 as the central part functions as a first updating unit.

In ACT 45, the processor 11 determines the selling floor terminal 5 associated with the display place of the commodity registered as the purchased commodity as explained above. For example, the processor 11 finds out, from the selling field terminal database DB2, the data record DR2 in which the commodity code included in the notification data of the take out is set in the field F23. The processor 11 determines, as the relevant selling floor terminal 5, the selling floor terminal 5 identified by the terminal ID set in the field F21 of the relevant data record DR2.

In ACT 46, the processor 11 instructs the determined selling floor terminal 5 to execute registration informing. For example, the processor 11 sends instruction data including identification information representing the execution instruction for the registration informing to the communication network 200 to transmit the instruction data to a communication address set in the field F22 of the found-out data record DR2. For example, the processor 11 generates a registration completion screen showing a commodity name, the number of items, and a total amount of the commodity registered as the purchased commodity and includes, in the instruction data, screen data representing the screen. That is, the processor 11 shows, on the registration completion screen, the commodity name set in the field F24 of the found-out data record DR2 and the number of items included in the notification data of the take-out. The processor 11 shows, on the registration screen, a total amount calculated by multiplying the price set in the field F25 of the found-out data record DR2 by the number of items. The processor 11 finds out, from the shopper database DB3, the data record DR3 in which the tracking code included in the notification data of the take-out is set in the field F31. If a valid shopper ID is set in the field F32 of the relevant data record DR3, the processor 11 shows the shopper ID on the registration completion screen as well. The processor 11 executes the information processing based on the sales management application AP1 in this way, whereby the computer including the processor 11 as the central part functions as a first instructing unit.

If finishing transmitting the instruction data, the processor 11 returns to the waiting state in ACT 31 to ACT 38 in FIG. 11.

In the sales management device 1, if the return is notified as explained above, the processor 11 determines YES in ACT 36 in FIG. 11 and proceeds to ACT 47 in FIG. 12.

In ACT 47, the processor 11 updates the purchased commodity database DB4 in order to cancel a purchased commodity based on the notification. That is, the processor 11 finds out, from the purchased commodity database DB4, the data record DR4 in which the tracking ID included in the notification data of the return is set in the field F41. The processor 11 finds out, from the relevant data record DR4, commodity data including the commodity code included in the notification data of the return and rewrites the number of items included in the commodity data to a number obtained by subtracting the number of items included in the notification data of the return from the number of items included in the commodity data. Consequently, the processor 11 cancels the returned commodity from purchased commodities by the returned number of items. If the number of items after the rewriting is "0", the processor 11 changes the cancellation flag to a state indicating that the purchased commodity is cancelled. The processor 11 executes the information processing based on the sales management application AP1 in this way, whereby the computer including the processor 11 as the central part functions as a second updating unit.

In ACT 48, the processor 11 determines the selling floor terminal 5 associated with the display place of the commodity cancelled from the purchased commodities as explained above. For example, the processor 11 finds out, from the selling floor terminal database DB2, the data record DR2 in which the commodity code included in the notification data of the return is set in the field F23. The processor 11 determines, as the relevant selling floor terminal 5, the selling floor terminal 5 identified by the terminal ID set in the field F21 of the relevant data record DR2.

In ACT 49, the processor 11 instructs the determined selling floor terminal 5 to execute cancellation informing. For example, the processor 11 sends instruction data including identification data representing the execution instruction for the cancellation informing to the communication network 200 to transmit the instruction data to the communication address set in the field F22 of the found-out data record DR2. For example, the processor 11 generates a cancellation completion screen showing the commodity name, the number of items, and the total amount of the commodity cancelled from the purchased commodities and includes, in the instruction data, screen data representing the screen. That is, the processor 11 shows, on the cancellation completion screen, the commodity name set in the field F24 of the found-out data record DR2 and the number of items included in the notification data of the return. The processor 11 shows, on the cancellation completion screen, a total amount calculated by multiplying the price set in the field F25 of the found-out data record DR2 by the number of items. The processor 11 finds out, from the shopper database DB3, the data record DR3 in which the tracking code included in the notification data of the return is set in the field F31. If a valid shopper ID is set in the field F32 of the relevant data record DR3, the processor 11 shows the shopper ID on the cancellation completion screen as well. The processor 11 executes the information processing based on the sales management application AP1, whereby the computer including the processor 11 as the central part functions as a second instructing unit.

If finishing transmitting the instruction data, the processor 11 returns to the waiting state in ACT 31 to ACT 38 in FIG. 11.

In the selling floor terminal 5, the processor 51 executes informing processing based on the selling floor terminal application AP4.

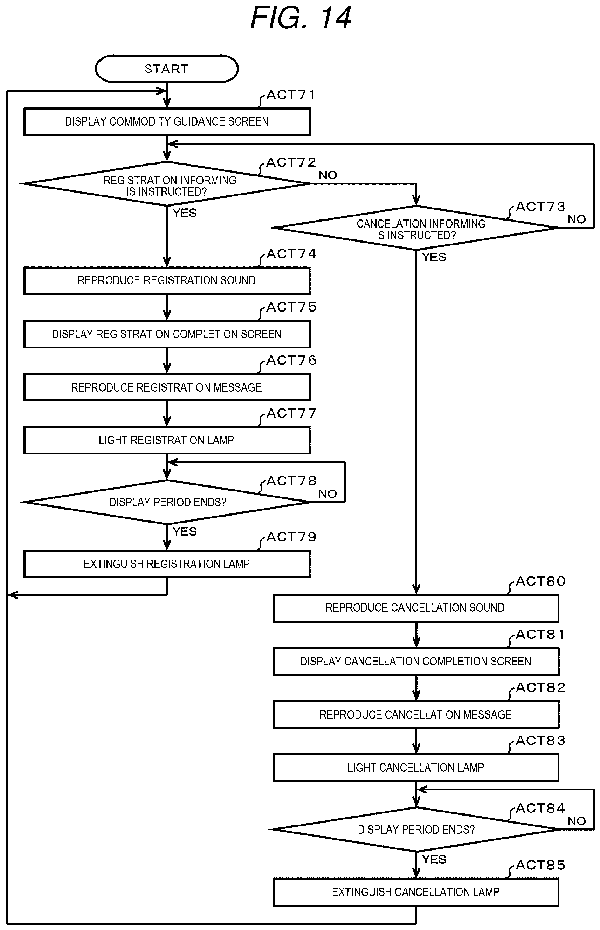

FIG. 14 is a flowchart of the informing processing by the processor 51.

In ACT 71, the processor 51 causes the display unit 54 to display a commodity guidance screen. The commodity guidance screen is a screen for informing a commodity displayed in the display place associated with the selling floor terminal 5 to a shopper.

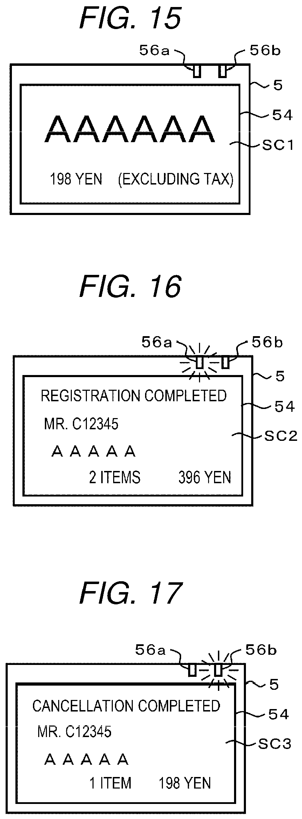

FIG. 15 is a diagram illustrating an example of the exterior of the selling floor terminal 5 in a state in which a commodity guidance screen SC1 is displayed.

On the commodity guidance screen SC1 illustrated in FIG. 15, a commodity, a commodity name of which is "AAAAAA" and a price excluding tax of which is "198 yen", is displayed in the associated display place. The commodity guidance screen SC1 may be decided in advance as operation setting for the selling floor terminal 5. Data of the commodity guidance screen SC1 is stored in, for example, the auxiliary storage unit 53. In a state in which the commodity guidance screen SC1 is displayed on the display unit 54, both of two lamps 56a and 56b included in the lamp unit 56 are not lit.

The processor 51 shifts to the waiting state in ACT 72 and ACT 73 in the state in which the commodity guidance screen SC1 is displayed.

In ACT 72, the processor 51 confirms whether a registration informing instruction is performed. If failing in confirming the instruction, the processor 51 determines NO and proceeds to ACT 73.

In ACT 73, the processor 51 confirms whether a cancellation informing instruction is performed. If failing in confirming the instruction, the processor 51 determines NO and returns to ACT 72.

In this way, the processor 51 waits for the registration informing instruction or the cancellation informing instruction in the waiting state in ACT 72 and ACT 73.

In this way, if the registration informing instruction or the cancellation informing instruction is not performed, the selling floor terminal 5 presents the commodity guidance screen SC1 to the shopper. Therefore, in this state, the selling floor terminal 5 functions in the same manner as the well-known electronic shelf tag. The selling floor terminal 5 may display, instead of the commodity guidance screen SC1, another commodity guidance screen such as a screen showing an explanatory sentence about a commodity. Alternatively, the selling floor terminal 5 may display, instead of the commodity guidance screen SC1, an advertisement screen concerning a commodity different from the associated commodity. Further, the selling floor terminal 5 may display the plurality of kinds of screens in a time division manner.

The selling floor terminal 5 associated with a display place where a plurality of commodities having different commodity codes are displayed is not suitable for such operation of the electronic shelf tag. Therefore, the processor 51 may not display a commodity guidance screen without executing ACT 70. However, the processor 51 may display a commodity guidance screen showing information concerning the plurality of commodities or may display, in a time division manner, a plurality of commodity guidance screens respectively representing the information concerning the plurality of commodities.

In the selling floor terminal 5 set as the destination of the instruction data transmitted from the sales management device 1 for the execution instruction for the registration informing as explained above, if the instruction data is transmitted via the communication network 200, the wireless unit 57 receives the instruction data. According to the reception of the instruction data, the processor 51 determines YES in ACT 72 and proceeds to ACT 74.

In ACT 74, the processor 51 causes the sound unit 55 to reproduce predetermined registration sound. The registration sound may be optionally decided by, for example, a designer of the selling floor terminal 5 or an administrator of the store. The registration sound is assumed to be, for example, short sound such as "pi".

In ACT 75, the processor 51 causes the display unit 54 to display the registration completion screen. For example, the processor 51 causes the display unit 54 to display a screen represented by screen data included in the instruction data. After editing, with a predetermined method, the screen represented by the screen data included in the instruction data, the processor 51 may cause the display unit 54 to display the screen.

In ACT 76, the processor 51 causes the sound unit 55 to reproduce a predetermined registration message. The registration message is a voice message for informing the shopper that the registration is completed. The registration message may be optionally decided by, for example, the designer of the selling floor terminal 5 or the administrator of the store. It is assumed that the registration message is set to content such as "registered" or "AAAAAA is registered". In the sales management device 1, the processor 11 may include, for example, in the instruction data, voice data representing the registration message. In this case, in the selling floor terminal 5, the processor 51 may reproduce the registration message according to the voice data. It is assumed that the registration message in this case is set to content such as "AAAAAA is registered by Mr. C12345". "C12345" is a member ID of the shopper and is an example of identification data for identifying the shopper. As the identification data, other data such as a name or a nickname of the shopper may be used.

In ACT 77, the processor 51 lights a registration lamp. In this embodiment, it is assumed that the lamp 56a included in the lamp unit 56 is used as the registration lamp.

FIG. 16 is a diagram illustrating an example of the exterior of the selling floor terminal 5 in a state in which a registration completion screen SC2 is displayed and the lamp 56a is lit.

The registration completion screen SC2 illustrated in FIG. 16 indicates that a target person, whose shopper ID is known as "C12345", takes out two items of a commodity, a commodity name of which is "AAAAAA" and a price excluding tax of which is "198 yen", from a display place and the commodity is registered as a purchased commodity. The lamp 56a is lit and the lamp 56b is not lit.

In this way, the completion of the registration may be informed to the shopper by each of the reproduction of the registration sound, the display of the registration completion screen SC2, the reproduction of the registration message, and the lighting of the lamp 56a.

All of the reproduction of the registration sound, the display of the registration completion screen SC2, the reproduction of the registration message, and the lighting of the lamp 56a are examples of an informing operation. The processor 51 executes the information processing based on the selling floor terminal application AP4 in this way, whereby a function of an informing unit is realized by cooperation of a computer including the processor 51 as a central part and the display unit 54, the sound unit 55, or the lamp 56a.

In ACT 78, the processor 51 waits for a predetermined display period to end. The display period may be optionally decided by, for example, the designer of the selling floor terminal 5 or the administrator of the store. If the display period ends, the processor 51 determines YES and proceeds to ACT 79.

In ACT 79, the processor 51 extinguishes the registration lamp, that is, the lamp 56a. Thereafter, the processor 51 returns to ACT 71 and returns the selling floor terminal 5 to the state in which the commodity guidance screen SC1 is displayed.

If the instruction data transmitted from the sales management device 1 for the execution instruction for the cancellation informing as explained above is received by the wireless unit 57, the processor 51 determines YES in ACT 73 and proceeds to ACT 80.

In ACT 80, the processor 51 causes the sound unit 55 to reproduce predetermined cancellation sound. The cancellation sound may be optionally decided by, for example, the designer of the selling floor terminal 5 or the administrator of the store. It is assumed that the cancellation sound is short sound different from registration sound such as "pipi".

In ACT 81, the processor 51 causes the display unit 54 to display a cancellation completion screen. For example, the processor 51 causes the display unit 54 to display a screen represented by screen data included in the instruction data. After editing, with a predetermined method, the screen represented by the screen data included in the instruction data, the processor 51 may cause the display unit 54 to display the screen.

In ACT 82, the processor 51 causes the sound unit 55 to reproduce a predetermined cancellation message. The cancellation message is a voice message for informing the shopper that the cancellation is completed. The cancellation message may be optionally decided by, for example, the designer of the selling floor terminal 5 or the administrator of the store. It is assumed that the cancellation message is set to content such as "cancelled" or "AAAAAA is cancelled". In the sales management device 1, the processor 11 may include, in the instruction data, voice data representing the cancellation message. In this case, in the selling floor terminal 5, the processor 51 may reproduce the cancellation message according to the voice data. It is assumed that the cancellation message in this case is set to content such as "AAAAAA is cancelled by Mr. C12345".

In ACT 83, the processor 51 lights a cancellation lamp. In this embodiment, it is assumed that the lamp 56b included in the lamp unit 56 is used as the cancellation lamp.

FIG. 17 is a diagram illustrating an example of the exterior of the selling floor terminal 5 in a state in which a cancellation completion screen SC3 is displayed and the lamp 56b is lit.

The cancellation completion screen SC3 illustrated in FIG. 17 indicates that a target person, whose shopper ID is known as "C12345", returns one item of a commodity, a commodity name of which is "AAAAAA" and a price excluding tax of which is "198 yen", to a display place and the commodity is cancelled from purchased commodities. The lamp 56b is lit and the lamp 56a is not lit.

In this way, the completion of the cancellation is informed to the shopper by each of the reproduction of the cancellation sound, the display of the cancellation completion screen SC3, the reproduction of the cancellation message, and the lighting of the lamp 56b.

All of the reproduction of the cancellation sound, the display of the cancellation completion screen SC3, the reproduction of the cancellation message, and the lighting of the lamp 56b are examples of the informing operation. The processor 51 executes the information processing based on the selling floor terminal application AP4 in this way, whereby the function of the informing unit is realized by the cooperation of the computer including the processor 51 as the central part and the display unit 54, the sound unit 55, or the lamp 56b.

In ACT 84, the processor 51 waits for a predetermined display period to end. The display period may be optionally decided by, for example, the designer of the selling floor terminal 5 or the administrator of the store. The display period for the cancellation completion screen SC3 may be the same as or may be different from the display period for the registration completion screen SC2. If the display period ends, the processor 51 determines YES and proceeds to ACT 85.

In ACT 85, the processor 51 extinguishes the cancellation lamp, that is, the lamp 56b. Thereafter, the processor 51 returns to ACT 71 and returns the selling floor terminal 5 to the state in which the commodity guidance screen SC1 is displayed.

A situation could occur in which the shopper set as the target person of the action monitoring processing cannot be detected by the sensor group 3 because of some reason. In such a case, in the action monitoring device 4, the processor 41 loses track of the target person not yet leaving the store. The processor 41 determines YES in ACT 21 in FIG. 10 and proceeds to ACT 25.

In ACT 25, the processor 41 notifies the loss to the sales management device 1. The processor 41 includes, in notification data for the notification, for example, the tracking ID determined in ACT 12. The processor 41 may include, in the notification data, data representing date and time of the loss. Thereafter, the processor 41 ends the action monitoring processing.

In the sales management device 1, if the loss is notified in this way, the processor 11 determines YES in ACT 37 in FIG. 11 and proceeds to ACT 50.

In ACT 50, the processor 11 updates the shopper database DB3 to indicate that the target person is lost track of. That is, the processor 11 finds out, from the shopper database DB3, the data record DR3 in which the tracking ID included in the notification data is set in the field F31 and sets data representing the present date and time in the field F34 of the data record DR3. If data representing date and time when the target person is lost track of is included in the notification data, the processor 11 may set the data in the field F34. Thereafter, the processor 11 ends the sales management processing.

In a situation in which the shopper continuously present in the store cannot be monitored in this way, the processor 11 ends both of the action monitoring processing and the sales management processing executed with the shopper set as the target person. However, since the shopper is present in the store, the shopper is detected by the sensor group 3 because of a situation change such as movement. In this case, since the action monitoring processing with the shopper set as the target person already ended, as new action monitoring processing concerning a new target person, in the action monitoring device 4, the processor 41 determines new detection in ACT 11 in FIG. 10. Consequently, a tracking ID different from the tracking ID before the loss is determined for the shopper. Action monitoring for the shopper as a target person different from the target person before the loss is performed.

In this case, since the shopper already finished check-in and is present in the selling floor, the shopper does not cause the check-in device 2 to read the member card. In the sales management device 1, the processor 11 does not execute ACT 40 in FIG. 11. In this way, the invalid data remains set in the field F32 in the data record DR3 in which the tracking ID determined anew is set in the field F31. The target person is detected anew in the selling floor and not in the authentication area. Accordingly, in the action monitoring device 4, the processor 41 determines NO in ACT 14 in FIG. 10 and directly shifts to the waiting state in ACT 19 to ACT 22. That is, the processor 41 does not execute ACT 18. Therefore, even if a shopper ID is not acquired yet, in the sales management device 1, the processor 11 does not perform ACT 42 and ACT 43 in FIG. 11.

Even if the tracking ID different from the tracking ID during the check-in is correlated halfway in the shopping as explained above, the shopper can continue the shopping. However, actions of the shopper in that case are monitored as actions of a new target person. Purchased commodities by one shopper are managed by a plurality of data records DR4 in the purchased commodity database DB4.

Concerning the target person unknown as to which shopper the target person is in this way, a shopper ID may be correlated by other information processing. The information processing for correlation may be performed by the processor 11 in the sales management device 1 or may be performed by the processor 41 in the action monitoring device 4. The information processing for correlation may be performed by receiving an instruction by a store clerk, a shopper, or the like or may be performed without intervention of the store clerk or the shopper. The information processing for correlation may be any processing. Therefore, explanation about the information processing is omitted.

If finishing taking out all commodities that the shopper desires to purchase, the shopper leaves the store taking the commodities.

In the action monitoring device 4, if confirming the store leaving of the target person, the processor 41 determines YES in ACT 22 in FIG. 10 and proceeds to ACT 26.

In ACT 26, the processor 41 notifies the store leaving to the sales management device 1. The processor 41 includes, in notification data for the notification, the tracking ID determined in ACT 12. Thereafter, the processor 41 ends the action monitoring processing.

In the sales management device 1, if the store leaving is notified as explained above, the processor 11 determines YES in ACT 38 in FIG. 11 and proceeds to ACT 51.

In ACT 51, the processor 11 performs store leaving processing. First, the processor 11 settles a price for the commodities that the shopper leaving the store takes away, that is, purchased commodities. For example, the processor 11 finds out, out of the data records DR3 included in the shopper database DB3, the data record DR3 in which the tracking ID included in the notification data of the store leaving is set in the field F31. The processor 11 determines a shopper ID set in the field F32 of the relevant data record DR3. The processor 11 finds out, out of the data records DR3 included in the shopper database DB3, all data records DR3 in which the relevant shopper ID is set in the field F22. The processor 11 finds out, from the purchased commodity database DB4, all data records DR4 in which any one of tracking IDs set in the field F31 of the relevant all data records DR3 is set in the field F41. The processor 11 determines, as purchased commodities, commodities represented by all commodity data included in the relevant all data records DR4 and calculates a price for the purchased commodities. The processor 11 finds out, from the member database DB1, the data record DR1 in which a member ID used as the determined shopper ID is set in the field F11. The processor 11 performs processing for settling the calculated price using payment information set in the field F13 of the relevant data record DR1. For example, the processor 11 requests, using a credit card number serving as the payment information, a not-illustrated settlement server to settle an amount of the calculated price. If the settlement is completed, the processor 11 deletes, from the shopper database DB3, all the data records DR3 found out from the shopper database DB3 as explained above. The processor 11 deletes, from the purchased commodity database DB4, all the data records DR4 found out from the purchased commodity database DB4 as explained above. The processor 11 may perform, as one kind of processing of the store leaving processing, processing for transmitting transaction data and journal data to a not-illustrated POS server or the like. The processor 11 may perform, as one kind of processing of the store leaving processing, processing for transmitting electronic receipt data to an electronic receipt server or the like. Thereafter, the processor 11 returns to the waiting state in ACT 31 to ACT 38.

An accounting device not illustrated in FIG. 1 may be provided. The accounting device may perform both of the processing of calculation of a price of purchased commodities and the processing of settlement of the price or only the processing of settlement. If use is permitted to nonmembers as well, at least settlement concerning the nonmembers is performed in the accounting machine.

As explained above, with the transaction processing system 100, if, according to take-out of a commodity from a display place, the purchased commodity database DB4 is updated in order to register the commodity as a purchased commodity, registration informing is performed in the selling floor terminal 5 set near the display place of the registered commodity. Consequently, the customer can confirm, without performing special operation, that the commodity taken out from the display place is registered as the purchased commodity.

With the transaction processing system 100, if, according to return of a commodity to a display place, the purchased commodity database DB4 is updated in order to cancel the commodity from purchased commodities, cancelation informing is performed in the selling floor terminal 5 set near the display place of the cancelled commodity. Consequently, the customer can confirm, without performing special operation, that the commodity returned to the display place is cancelled from the purchased commodities.

With the transaction processing system 100, on the registration completion screen SC2 or the cancellation completion screen SC3, concerning the registered or cancelled commodity, the number of pieces and a total amount of the commodity taken out from the display place or returned to the display place are shown together with a shopper ID of a shopper who takes out or returns the commodity. Consequently, the shopper can specifically confirm content of the performed registration or cancellation.

With the transaction processing system 100, the registration notification and the cancellation notification are different operations to enable the shopper to distinguish the registration notification and the cancellation notification. Consequently the shopper can easily confirm which of registration and cancellation of a purchased commodity is performed.

With the transaction processing system 100, the selling floor terminal 5 performs, according to the instruction for the registration informing, a plurality of informing operations including the reproduction of the registration sound, the display of the registration completion screen SC2, the reproduction of the registration message, and the lighting of the lamp 56a. With the transaction processing system 100, the selling floor terminal 5 performs, according to the instruction for the cancellation informing, a plurality of informing operations including the reproduction of the cancellation sound, the display of the cancellation completion screen SC3, the reproduction of the cancellation message, and the lighting of the lamp 56b. Consequently, by hearing the registration sound or the registration message or the cancellation sound or the cancellation message, the shopper can confirm that the registration or the cancellation is performed without viewing the display on the display unit 54 or the lamp unit 56. By viewing the display on the display unit 54 or the lamp unit 56, the shopper can confirm that the registration or the cancellation is performed. It is sometimes hard to hear sound because of ambient noise. If the selling floor terminals 5 are set close to one another, it is sometimes hard to distinguish in which of the selling floor terminals 5 the informing operation is performed. On the other hand, with visual confirmation, it is possible to surely confirm in which of the selling floor terminals 5 the informing is performed. In this way, by performing the plurality of informing operations, it is possible to more surely inform the shopper that the registration or the cancellation is performed.

Various modified implementations explained below of at least one embodiment are possible.

The sales management processing may be executed in a device different from the sales management device 1 such as a POS server.

The action monitoring processing may be executed in a device different from the action monitoring device 4 such as a POS server.

The action monitoring processing and the sales management processing may be executed by the same device. In this case, either the sales management device 1 or the action monitoring device 4 may execute the action monitoring processing and the sales management processing. Alternatively, a device different from the sales management device 1 and the action monitoring device 4 such as a POS server may execute the action monitoring processing and the sales management processing.

The informing operation for the registration informing and the information operation for the cancellation informing may be the same.

The informing operation for the registration informing may be a part of the reproduction of the registration sound, the display of the registration completion screen SC2, the reproduction of the registration message, and the lighting of the lamp 56a.

The informing operation for the cancellation informing may be a part of the reproduction of the cancellation sound, the display of the cancellation completion screen SC3, the reproduction of the cancellation message, and the lighting of the lamp 56b. The informing operation to be performed does not need to coincide with the informing operation for the registration informing.

The informing operation for the cancellation informing may not be executed.

As in at least one embodiment, if one selling floor terminal 5 is associated with the display place of one commodity, in the registration informing or the cancellation informing, it is not essential to present data for identifying a commodity such as a commodity name. If one selling floor terminal 5 is associated with display places of a plurality of commodities, in the registration informing or the cancellation informing, it is preferable to present data for identifying a commodity such as a commodity name. However, even if the data for identifying the commodity such as the commodity name is not presented, it is possible to cause the shopper to confirm that the registration or the cancellation is performed.

A part or all of the functions realized by the processors 11, 21, 41, and 51 according to the information processing can also be realized by hardware that executes information processing not based on a program such as a logic circuit. Each of the functions can also be realized by combining software control with the hardware such as the logic circuit.

The several embodiments are explained above. However, the embodiments are presented as examples and are not intended to limit the scope of the disclosure. These new embodiments can be implemented in other various forms. Various omissions, substitutions, and changes can be made without departing from the scope of the disclosure. These embodiments and modifications of the embodiments are included in the scope and the gist of the disclosure and included in the disclosure described in claims and the scope of equivalents of the disclosure.

## Claims

1. A transaction processing system including a plurality of terminal devices associated with display places of commodities and set near the associated display places of the commodities, the transaction processing system comprising:
one or more computers having:
informing units, of the one or more computers, respectively provided in the plurality of terminal devices and configured to perform an informing operation;
a first determining unit, of the one or more computers, configured to determine the commodity taken out from any one of the display places;
a first updating unit, of the one or more computers, configured to update list data, which is stored in a storage device and represents a list of the commodities registered as purchased commodities, to register, as the purchased commodity, the commodity determined by the first determining unit; and
a first instructing unit, of the one or more computers, configured to instruct, according to the update of the list data by the first updating unit, execution of the informing operation by the informing unit of the terminal device correlated with the display place of the commodity determined by the first determining unit.

2. The transaction processing system according to claim 1, wherein
the storage device correlates the list data with a shopper and stores the list data,
the first updating unit is configured to update the list data correlated with the shopper who takes out the commodity, and
the informing unit is configured to inform, according to an instruction from the first instructing unit, together with identification data for identifying the shopper identified by a first identifying unit, of the one or more computers, a number of items and a total amount of the commodity registered as the purchased commodity by the update of the list data by the first updating unit.

3. The transaction processing system according to claim 1 or 2, further comprising:
a second determining unit, of the one or more computers, configured to determine the commodity returned to the display place;
a second updating unit, of the one or more computers, configured to update the list data to cancel the commodity determined by the second determining unit from the purchased commodities; and
a second instructing unit, of the one or more computers, configured to instruct, according to the update of the list data by the second updating unit, execution of the informing operation by the informing unit of the terminal device associated with the display place of the commodity determined by the second determining unit.

4. The transaction processing system according to claim 3, wherein
the second updating unit is configured to update the list data associated with the shopper who returns the commodity, and
the informing unit is configured to inform, according to an instruction from the second instructing unit, together with the identification data for identifying the shopper identified by a second identifying unit, of the one or more computers, a number of items and a total amount of the commodity cancelled from the purchased commodities by the update of the list data by the second updating unit.

5. The transaction processing system according to claim 2, wherein the informing unit is configured to perform different informing operations respectively according to an instruction from the first instructing unit and an instruction from the second instructing unit.

6. The transaction processing system according to any one of claims 1 to 5, further comprising a sensor configured to detect action of a shopper with respect to the commodities.

7. The transaction processing system according to claim 6, further comprising a monitor configured to monitor action of the shopper based on detection by the sensor.

8. The transaction processing system according to any one of claims 1 to 7, further comprising a member database for storing a list of member IDs of shoppers registered to shop for the commodities.

9. The transaction processing system according to any one of claims 1 to 8, further comprising a shopper database for storing shopper ID data.

10. The transaction processing system according to any one of claims 1 to 9, further comprising a check in computer configured to check in a shopper based on a member ID.

11. The transaction processing system according to any one of claims 1 to 10, further comprising an action monitoring computer configured to monitor action of a shopper with respect to the commodities.

12. The transaction processing system according to claim 11, wherein the action monitoring computer is configured to monitor at least one of a target shopper ID, leaving a store, or entering the store.

13. A method of operating a transaction processing system including a plurality of terminal devices associated with display places of commodities and set near the associated display places of the commodities, the method comprising:
performing an informing operation;
determining the commodity taken out from any one of the display places;
updating list data, which is stored in a storage device and represents a list of the commodities registered as purchased commodities, to register, as the purchased commodity, the commodity determined; and
instructing, according to the update of the list data, execution of the informing operation correlated with the display place of the commodity determined.
